Europäisches Patentamt

European Patent Office

Office européen des brevets

(11) Veröffentlichungsnummer: **0 019 283**
**A2**

(12) ## EUROPÄISCHE PATENTANMELDUNG

(21) Anmeldenummer: 80102697.2

(22) Anmeldetag: 15.05.80

(51) Int. Cl.³: **F 16 F 15/12**
     F 16 F 15/30

(30) Priorität: 18.05.79 DE 2920125

(43) Veröffentlichungstag der Anmeldung:
     26.11.80 Patentblatt 80/24

(84) Benannte Vertragsstaaten:
     AT BE CH FR GB IT LI NL SE

(71) Anmelder: **Hartz, Helmut**
     **Hedwigstrasse 24**
     **D-4690 Herne 2(DE)**

(72) Erfinder: **Hartz, Helmut**
     **Hedwigstrasse 24**
     **D-4690 Herne 2(DE)**

(74) Vertreter: **Spalthoff, Adolf, Dipl.-Ing.**
     **Pelmanstrasse 31 P.O. Box 34 02 20**
     **D-4300 Essen 1(DE)**

(54) **Torsions-Schwingungsdämpfer.**

(57) Die Zusammenfassung betrifft einen Torsions-Schwingungsdämpfer, insbesondere zur Dämpfung der Drehschwingungen von Kurbelwellen von Verbrennungsmaschinen, welcher aus einer leichten und einer schweren Masse besteht, von denen die leichte Masse einmal starr mit der zu dämpfenden Welle und zum anderen über eine Zwischenlage aus Gummi od.dgl. federnd mit der schweren Masse verbunden ist. Der Erfindung liegt die Aufgabe zugrunde, einen Torsions-Schwingungsdämpfer vorgenannter Art zu schaffen, welcher in einfacher Weise ausgebildet ist, eine hohe Lebensdauer besitzt sowie die Verwendung weicherer Gummimischungen für die Federnde Ziwschenlage ermöglicht. Erfindungsgemäß wird dies dadurch erreicht, daß die leichte und schwere Masse (1,3) sowie ihre Zwischenlage (2) im wesentlichen ringförmig ausgebildet sind und die leichte Masse (1) mit einem im wesentlichen ringförmigen Widerlager (4) verbunden ist, zwischen dem und der schweren Masse (3) eine Reibscheibe (5) od.dgl. vorgesehen ist. Leichte und schwere Masse (1,3) sowie ihre Zwischenlage können im wesentlichen plattenförmig gestaltet sein. Die federnde Zwischenlage (2) kann eine Vorspannung aufweisen.

Croydon Printing Company Ltd.

## "Torsions-Schwingungsdämpfer"

Die Erfindung betrifft einen Torsions-Schwingungsdämpfer,
insbesondere zur Dämpfung der Drehschwingungen von Kurbelwellen von Verbrennungsmaschinen, welcher aus einer leichten und einer schweren Masse besteht, von denen die leichte
Masse einmal starr mit der zu dämpfenden Welle und zum anderen über eine Zwischenlage aus Gummi od.dgl. federnd mit
der schweren Masse verbunden ist.

Torsions-Schwingungsdämpfer dienen dem Zweck, Drehschwingungen zu dämpfen, zu welchem Zweck einer Welle Arbeit entzogen wird. Die Wirkung der bekannten Schwingungsdämpfer der
vorgenannten Art besteht darin, daß die schwere Masse gegenüber der leichten, deren Masse durch die Welle vergrößert
wird, eine Eigenschwingungszahl besitzt, die von ihrer eigenen
Masse und Federzahl abhängig ist. Werden diese so abgestimmt,
daß die Eigenschwingungszahl der Dämpfermasse etwa gleich jener der Welle ist, so gerät bei Resonanz die Dämpfermasse in
Schwingungen, nimmt Arbeit aus der Welle auf und dämpft dadurch
deren Schwingungen. Die bekannten Schwingungsdämpfer haben den
Nachteil, daß diese nur eine begrenzte Lebensdauer haben, da
die gesamte, durch Dämpfung entstehende Wärme in der federnden Zwischenlage aus Gummi entsteht, welche aber ein schlechter Wärmeleiter ist, so daß die starke Erwärmung zu vorzeitiger Zerstörung führt. Außerdem muß die federnde Zwischenlage aus Gummi eine bestimmte Härte besitzen, da ein zu weicher Gummi wegen fehlender Dämpfung durch zu große Wechselwinkel vorzeitig zerstört wird. Um dennoch in Resonanz zu gelangen, sind wieder größere Schwingmassen erforderlich.

Von diesem Stand der Technik ausgehend liegt der Erfindung die Aufgabe zugrunde, einen Torsions-Schwingungsdämpfer der eingangs genannten Art zu schaffen, welcher in einfacher Weise ausgebildet ist, eine hohe Lebensdauer besitzt sowie die Verwendung weicherer Gummimischungen für die federnde Zwischenlage ermöglicht.

Gemäß der Erfindung wird dies dadurch erreicht, daß die leichte und schwere Masse sowie ihre Zwischenlage im wesentlichen ringförmit ausgebildet sind und die leichte Masse mit einem im wesentlichen ringförmigen Widerlager verbunden ist, zwischen dem und der schweren Masse eine Reibscheibe od.dgl. vorgesehen ist. Durch die Reibungsdämpfung wird einer vorzeitigen Zerstörung der federnden Zwischenlage aus Gummi entgegengewirkt, da die auftretenden Amplituden und Wechselwinkel erheblich vermindert werden, ohne die dynamische Drehsteifigkeit des Schwingungsdämpfers zu verändern. Die durch die Reibungsdämpfung entstehende Wärme gelangt nur auf Metallteile, von welchen sie wesentlich leichter abgeführt werden kann als aus der aus Gummi bestehenden Zwischenlage. Darüber hinaus ermöglicht die Reibungsdämpfung die Verwendung weicherer Gummimischungen für die federnde Zwischenlage, mit der Folge einer geringeren Erwärmung im Gummi und dadurch einer Herabsetzung der Beanspruchung. Zur Erreichung der Resonanz der schweren Masse können bei weicherem Gummi in der Zwischenlage auch kleinere Massen Verwendung finden. Die leichte und schwere Masse sowie ihre Zwischenlage können im wesentlichen plattenförmig gestaltet sein, so daß sich eine insgesamt schmale gedrängte Bauweise ergibt. Es ist jedoch auch möglich, leichte und schwere Masse sowie ihre Zwischenlage koaxial zueinander anzuordnen.

Vorteilhaft ist die federnde Zwischenlage mit einer Vorspannung versehen, wodurch einmal die Beanspruchbarkeit der Zwischenlage bei Drehschub erhöht wird und zum anderen der Grad der erzielten Reibung und damit der Dämpfung.

Gemäß einem weiteren Merkmal der Erfindung weist die schwere Masse eine Ausnehmung auf, in die sich die Reibscheibe od.dgl. erstreckt und in der eine oder mehrere Federn, z.B. Tellerfedern, angeordnet ist bzw. sind, die sich einmal an der schweren Masse und zum anderen an einem Zwischenring abstützen, der gegen die Reibscheibe od.dgl. anliegend gehalten ist. Durch die Federn wird der Bereich des konstanten Druckes auf die Reibscheibe erhöht und der auftretende Verschleiß ausgeglichen. Vorteilhaft kann sowohl eine Vorspannung in der Zwischenlage als auch besondere Federn vorgesehen sein.

Nach einem weiteren Vorschlag der Erfindung ist der Zwischenring in axialer Richtung verschiebbar angebracht, so daß sich
der Verschleiß leicht ausgleichen läßt.

Der Zwischenring ist auf Bolzen od.dgl. geführt, die sich in
entsprechend gestaltete Bohrungen od.dgl. der schweren Masse
erstrecken. Die Bohrungen od.dgl. können mit Spiel in Ausnehmungen des Zwischenringes angeordnet sein, so daß eine radiale Mitnahme der Drehscheibe od.dgl. entweder verdrehsteif
oder mit Spiel, z.B. über Langlöcher, erfolgt.

Gemäß einem weiteren Merkmal der Erfindung ist zwischen der
Unterseite der schweren Masse und einem Ansatz od.dgl. des
Widerlagers ein Zentrierring vorgesehen. Die Zentrierung verhindert durch eine etwa vorhandene Unwucht entstehende unnötige Beanspruchungen in der Zwischenlage.

Vorteilhaft ist die schwere Masse durch die Reibscheibe od.dgl.
in axialer Richtung parallel geführt, so daß die schwere Masse
keine Taumelbewegungen ausführen kann.

Ein Ausführungsbeispiel der Erfindung ist an Hand der Zeichnung
näher erläutert, und zwar zeigt:

Figur 1 eine geschnittene Seitenansicht einer ersten Ausführungsform eines Schwingungsdämpfers durch ihre obere
Hälfte und

Figur 2 eine geschnittene Seitenansicht einer zweiten Ausführungsform durch ihre obere Hälfte.

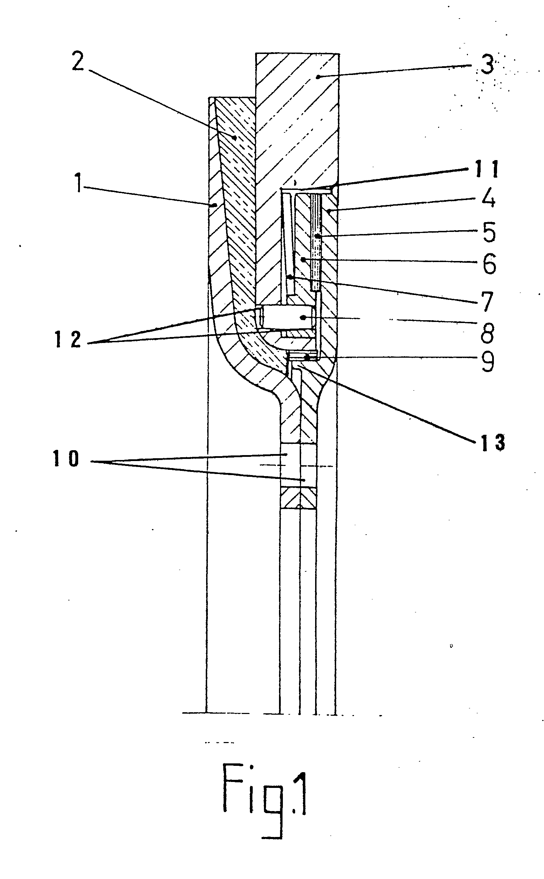

In Figur 1 ist mit 1 die leichte Masse bezeichnet, die über die
Bohrung 10 an einem nicht weiter dargestellten Flansch starr befestigt ist, der beispielsweise auf das Ende einer Kurbelwelle aufgekeilt ist. Mit der leichten Masse 1 ist über die federnde Zwischenlage 2 auf Gummi die schwere Masse 3, d.h. die eigentliche
Dämpfermasse, verbunden. Leichte Masse 1, Zwischenlage 2 sowie
schwere Masse 3 sind ringförmig und im wesentlichen plattenförmig
ausgebildet. An der leichten Masse 1 ist ein Widerlager 4 befestigt,
welches ebenfalls Bohrungen 10 aufweist, so daß eine Befestigung zusammen mit der leichten Masse 1 an einem nicht weiter dargestellten Flansch erfolgt.

Die schwere Masse 3 weist eine Ausnehmung 11 auf, in die sich
das Widerlager 4 erstreckt sowie ein Zwischenring 6, der mittels
der Bolzen 8 mit der schweren Masse 3 verbunden ist. Die Bolzen
8 erstrecken sich in entsprechend gestaltete Bohrungen 12 der
schweren Masse 3 sowie des Zwischenrings 6.

Zwischen dem Zwischenring 6 und dem Widerlager 4 ist eine Reibscheibe 5 angeordnet.

In der Ausnehmung 11 der schweren Masse 3 befinden sich mehrere Federn 7 in Form von Tellerfedern, welche sich einerseits an der schweren Masse 3 und andererseits an dem Zwischenring 6 abstützen. Unter der Wirkung der Federn 7 wird der Zwischenring 6 anliegend gegen die Reibscheibe 5 gehalten, so daß der auftretende Verschleiß selbsttätig ausgeglichen wird. Zu diesem Zwecke ist der Zwischenring 6 axial verschiebbar auf dem Bolzen 8 angeordnet.

Zwischen der Unterseite der schweren Masse 3 und einem Ansatz 13 des Widerlagers 4 ist ein Zentrierring 9 vorgesehen.

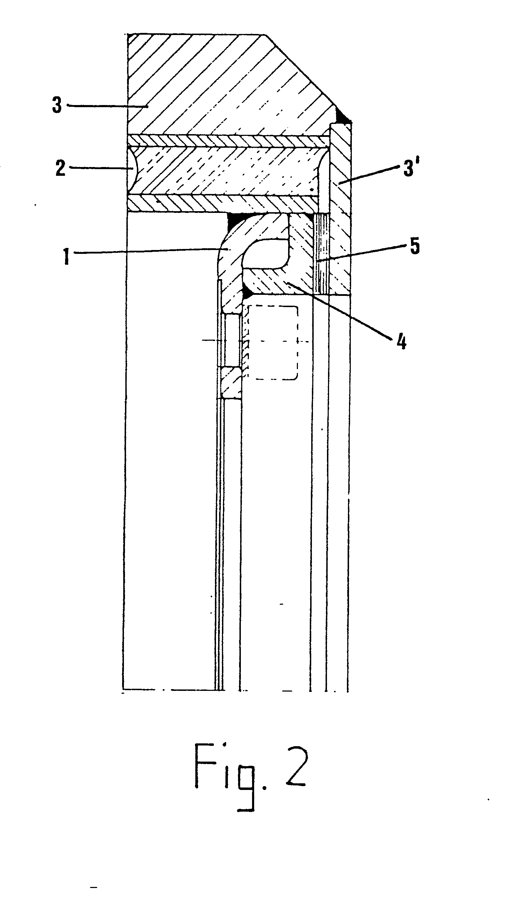

Bei der Ausführungsform nach Figur 2 sind gleiche Bezugszeichen für gleiche Bauteile verwendet. Im Gegensatz zu der scheibenförmigen Ausgestaltung der leichten und schweren Massen 1,3 sowie des zwischengeordneten Elastomers 2 findet bei dieser Ausführung eine konzentrische Anordnung dieser Bauteil Verwendung. Die leichte Masse 1 weist ein im Querschnitt winkelförmiges Widerlager 4 für die Reibscheibe 5 auf, welches sich an ihrer an- deren Seite gegen einen ringförmigen plattenartigen Ansatz 3' der schweren Masse 3 abstützt.

Bei dieser Ausführungsform wird die Rückstellkraft des
auf Schub vorgespannten Elastomers 2 als Feder benutzt.
Es ist jedoch auch eine Kombination mit zusätzlichen Federn 7 möglich, wie in Figur 1 dargestellt.

Durch die Vorspannung im Elastomer 2 erhöht sich die Eigendämpfung, ohne die Elastizität zu beeinflussen. Dies wird
ausgenutzt, um insbesondere die Winkelausschläge zu vermindern, deren Größe maßgeblich zur Wärmeentwicklung beitragen.
Zur Erzielung des gleichen Effektes dient auch die Reibungsdämpfung. Die Frequenzlage ist vorgegeben und kann nicht verändert werden. Die einzige positive Beeinflussungsmöglichkeit
besteht daher in der Verringerung der Ausschlagwinkel in Resonanz, um höhere Belastbarkeiten zu erzielen. Wie bekannt,
werden vornehmlich bei aufgeladenen Motoren die Drücke in den
Zylindern immer höher, so daß sich die erfindungsgemäße Lösung
als sehr vorteilhaft erweist.

Der erfindungsgemäße Schwingungsdämpfer weist einen vergleichsweise einfachen Aufbau auf und ergibt eine einwandfreie Dämpfung
von auftretenden Torsionsschwingungen zusammen mit einer langen
Lebensdauer.

PATENTANSPRÜCHE :

1. Torsions-Schwingungsdämpfer, insbesondere zur Dämpfung der Drehschwingungen von Kurbelwellen von Verbrennungsmaschinen, welcher aus einer leichten und einer schweren Masse besteht, von denen die leichte Masse einmal starr mit der zu dämpfenden Welle und zum anderen über eine Zwischenlage aus Gummi od.dgl. federnd mit der schweren Masse verbunden ist, dadurch gekennzeichnet, daß die leichte und schwere Masse (1,3) sowie ihre Zwischenlage (2) im wesentlichen ringförmig ausgebildet sind und die leichte Masse (1) mit einem im wesentlichen ringförmigen Widerlager (4) verbunden ist, zwischen dem und der schweren Masse (3) eine Reibscheibe (5) od.dgl. vorgesehen ist.

2. Torsions-Schwingungsdämpfer nach Anspruch 1, dadurch gekennzeichnet, daß die leichte und schwere Masse (1,3) sowie ihre Zwischenlage im wesentlichen plattenförmig gestaltet sind.

3. Torsions-Schwingungsdämpfer nach Anspruch 1 und/oder 2, dadurch gekennzeichnet, daß die federnde Zwischenlage (2) mit einer Vorspannung versehen ist.

4. Torsions-Schwingungsdämpfer nach Anspruch 1 und/oder 2, dadurch gekennzeichnet, daß die schwere Masse (3) eine Ausnehmung (11) aufweist, in die sich die Reibscheibe (5) od.dgl. erstreckt und in der eine oder mehrere Federn (7) angeordnet sind, die sich einmal an der schweren Masse (3) und zum anderen an einem Zwischenring (6) abstützen, der gegen die Reibscheibe (5) od.dgl. anliegend gehalten ist.

5. Torsions-Schwingungsdämpfer nach Anspruch 1 und/oder 2, dadurch gekennzeichnet, daß eine Vorspannung der Zwischenlage (2) sowie eine oder mehrere Federn (7) vorgesehen sind.

6. Torsions-Schwingungsdämpfer nach Anspruch 1 und/oder einem oder mehreren der folgenden, dadurch gekennzeichnet, daß der Zwischenring (6) in axialer Richtung verschiebbar angebracht ist.

7. Torsions-Schwingungsdämpfer nach Anspruch 1 und/oder einem oder mehreren der folgenden, dadurch gekennzeichnet, daß der Zwischenring (6) auf Bolzen (8) od.dgl. geführt ist, die sich in entsprechend gestaltete Bohrungen (12) od.dgl. der schweren Masse (3) erstrecken.

8. Torsions-Schwingungsdämpfer nach Anspruch 1 und/oder einem oder mehreren der folgenden, dadurch gekennzeichnet, daß die Bolzen (8) od.dgl. mit Spiel in Bohrungen (12) od.dgl. des Zwischenringes (6) angeordnet sind.

9. Torsions-Schwingungsdämpfer nach Anspruch 1 und/oder einem oder mehreren der folgenden, dadurch gekennzeichnet, daß zwischen der Unterseite der schweren Masse (3) und einem Ansatz (13) od.dgl. des Widerlagers (4) ein Zentrierring (9) vorgesehen ist.

10. Torsions-Schwingungsdämpfer nach Anspruch 1 und/oder einem oder mehreren der folgenden, dadurch gekennzeichnet, daß die schwere Masse (3) durch die Reibscheibe (5) od.dgl. in axialer Richtung parallel geführt ist.

Fig.1

Fig. 2